# EUROPÄISCHE PATENTSCHRIFT

(11) **EP 3 365 562 B1**
(45) Veröffentlichungstag und Bekanntmachung des Hinweises auf die Patenterteilung: **22.06.2022**
(21) Anmeldenummer: 16778231.7
(22) Anmeldetag: 20.09.2016
(51) Int. Cl.: F16B 5/02

(54) **PLATTENARTIGES BAUTEIL MIT EINER DAS PLATTENARTIGE BAUTEIL DURCHGREIFENDEN BEFESTIGUNGSEINRICHTUNG**
PLATE-LIKE COMPONENT WITH A FASTENING DEVICE REACHING THROUGH THE PLATE-LIKE COMPONENT
ÉLÉMENT EN FORME DE PLAQUE MUNI D'UN DISPOSITIF DE FIXATION TRAVERSANT L'ÉLÉMENT EN FORME DE PLAQUE

(30) Priorität: 23.10.2015 DE 102015118117
(43) Veröffentlichungstag der Anmeldung: 29.08.2018
(73) Patentinhaber: ElringKlinger AG, 72581 Dettingen/Erms (DE)
(72) Erfinder: GLAUBER, Andreas, 90579 Langenzenn (DE); MORENO-LECHADO, Sergio, 90411 Nürnberg (DE)
(74) Vertreter: Oberdorfer, Jürgen
(86) Internationale Anmeldenummer: PCT/EP2016/072237
(87) Internationale Veröffentlichungsnummer: WO 2017/067727

(56) Entgegenhaltungen:
- DE-A1-102005 024 864
- JP-A- 2014 148 941
- KR-A- 20130 040 289
- US-A- 3 675 881
- US-A- 4 306 708
- US-A1- 2005 040 576

## Beschreibung

Die Erfindung betrifft ein plattenartiges Bauteil mit einer das plattenartige Bauteil durchgreifenden Befestigungseinrichtung nach dem Oberbegriff des Anspruchs 1.

Aus der US 2011/0220676 A1 ist ein gattungsgemäßes plattenartiges Bauteil bekannt. Es wird offenbart, ein plattenartiges Bauteil, insbesondere ein Wärmeabschirmteil mittels einer aus einem Drahtgestrick bestehenden Hohlniet, in der eine Befestigungshülse steckt, entkoppelt an einen Befestigungspunkt eines anderen Bauteils zu befestigen.

Die Niet aus Drahtgestrick wird dabei durch eine Öffnung im plattenartigen Bauteil gesteckt und durch Zusammenziehen in Längsrichtung oder Zusammendrücken/Stauchen in Längsrichtung mit dem plattenartigen Bauteil vernietet.

Aus der DE 10 2005 024 864 A1 ist ein Hitzeschild bekannt, welches mittels einer Doppelkragenhülse, die gegenüber dem plattenartigen Bauteil durch eine Wellfeder abgestützt ist, entkoppelt befestigbar ist.

Aus der DE 100 21 575 A1 ist eine zur DE 10 2005 024 864 A1 vergleichbare Lösung bekannt, wobei das Entkopplungselement als Elastomerring ausgebildet ist.

US 3 675 881 zeigt eine Lagerbüchse für eine Motorplatte zu deren Montage an einer anderen Platte. Das zu montierende plattenartige Bauteil ist somit die Motorplatte.

Trotz einer Vielzahl von bereits bekannten Lösungen zur entkoppelten Befestigung von plattenartigen Bauteilen, insbesondere Wärmeabschirmteilen, bleibt es wünschenswert, ein plattenartiges Bauteil mit einem verbesserten Entkopplungssystem befestigbar zu machen. Insbesondere soll eine Entkopplung auch bei einer Verschiebbarkeit einer Befestigungseinrichtung des plattenartigen Bauteils gewährleistet sein.

In einer besonderen Ausführungsform soll zusätzlich zur Entkopplung ein gewisses, vorbestimmbares Maß an Dämpfung, z. B. Schwingungsdämpfung mit einer Befestigungseinrichtung verwirklichbar sein.

Des Weiteren ist es zweckmäßig und wünschenswert, eine grundsätzlich einfach aufgebaute und leicht montierbare, insbesondere ohne übermäßig großen Werkzeug- und Apparateaufwand montierbare Befestigungseinrichtung anzugeben, die in ein plattenartiges Bauteil integrierbar ist.

Diese Aufgaben werden mit einem plattenartigen Bauteil aufweisend eine Befestigungseinrichtung mit den Merkmalen des Anspruchs 1 gelöst.

Gemäß der Erfindung wird ein plattenartiges Bauteil einer Dicke t mit einer das plattenartige Bauteil durch eine Befestigungsöffnung mit einem lichten Maß D durchgreifenden Befestigungseinrichtung, wobei die Befestigungseinrichtung eine starre, die Befestigungsöffnung durchgreifende Hülse einer Länge L > t, durch die ein Befestigungselement führbar ist, aufweist und die Hülse außenumfänglich von zumindest einem Dämpfungs-/Entkopplungskörper aus einem Drahtgestrick umgeben ist, derart weitergebildet, dass der Dämpfungskörper im Bereich eines Durchtritts durch die Befestigungsöffnung ein Außenmaß von D_{Dk1} < D besitzt, so dass ein Untermaß U = D - D_{Dk1} entsteht und der zumindest eine Dämpfungskörper im Bereich außerhalb des Durchtritts durch die Befestigungsöffnung in einer Umfangsrichtung zumindest abschnittsweise ein Außenmaß von D_{Dk2} > D + 2 * U besitzt.

Mit einer solchen Lösung gelingt es, ein innerhalb der Befestigungsöffnung verschiebliches Entkopplungselement zu schaffen, welches trotzdem unverlierbar gehalten ist. Trotz zur Verfügungsstellung einer Verschiebbarkeit (Schiebefunktion) wird die Dämpfungswirkung der Befestigungseinrichtung sowohl in einer axialen (vertikalen) wie auch in einer radialen (horizontalen) Richtung, d.h. insbesondere in Plattenrichtung und senkrecht dazu, gewährleistet. Dies wird insbesondere dadurch realisiert, dass die Abmaße des Drahtgestricks und der Hülse so gewählt werden, dass sich im resultierenden Freiraum eine geringfügige Klemmung des Bauteils entsteht. Aus der Klemmung resultiert ein gewisses Maß an mechanischer Dämpfung. Um das Abschirmelement zu verschieben oder bewegen zu können, insbesondere innerhalb der Durchtrittsöffnung bewegen und/oder verschieben zu können, müssen Klemm- und/oder Reibkräfte zwischen dem Drahtgestrick und dem plattenartigen Bauteil überwunden werden.

Eine Dämpfungswirkung bleibt auch bei der maximal möglichen Verschiebeposition vorhanden, da sichergestellt ist, dass es keinen direkten Kontakt zwischen der Hülse und dem plattenartigen Bauteil gibt.

Es kommen lediglich Drahtgestrick und Bauteil in Kontakt, so dass kein hartes, Geräusche erzeugendes Aufeinandertreffen von Hülse und Bauteil erfolgt. Das Drahtgestrick ermöglicht es, in jeder Lageposition eine Entkopplung und/oder Dämpfung zwischen der Hülse und dem plattenartigen Bauteil zu gewährleisten, welches üblicherweise ein Abschirmteil ist. Zwischen Drahtgestrick und Abschirmbauteil, also dem plattenartigen Bauteil, befindliche Zwischenscheiben (optional) stellen sicher, dass die Oberfläche des plattenartigen Bauteiles, welches z. B. aus Aluminium, Stahl oder Edelstahl gefertigt ist, durch Bewegungen des Drahtgestricks nicht beschädigt werden kann. Zudem gewähren die Zwischenscheiben eine gleichbleibende Verschiebemöglichkeit, d.h. innerhalb des Verschiebebereichs eine möglichst konstante Verschiebekraft. So wird sichergestellt, dass sich das Drahtgestrick nicht an der Oberfläche verzahnen kann oder die Schiebefunktion oder die Verschiebemöglichkeit durch Oberflächenunebenheiten des plattenartigen Bauteils beeinflusst wird.

Die Schiebesitzfunktion wird insbesondere dadurch ermöglicht, dass eine Abstimmung der Abmaße der Einzelkomponenten der Befestigungseinrichtung erfolgt. Diese werden so gewählt, dass ein überwindbares Maß an Klemmung zwischen dem plattenartigen Bauteil und der montierten Befestigungseinrichtung vorliegt. Die Intensität der Klemmung wird insbesondere so gewählt, dass die Befestigungseinrichtung jedenfalls nicht durch ihr Eigengewicht eine Lageänderung (Verschiebung) innerhalb der Durchtrittsöffnung erfahren kann, auch wenn die Gewichtskraft in Radialrichtung wirkt. Bevorzugt ist die so voreingestellte Reibungskraft F_{P} so gewählt, dass auch unter dynamischen Beanspruchungen, z. B. beim Transport, ein unbeabsichtigtes Verrutschen der Befestigungseinrichtung innerhalb der Durchtrittsöffnung vermieden ist.

Die Entkopplungs- und Dämpfungswirkung in horizontaler und vertikaler Ebene, d.h. insbesondere in der Axialrichtung A und in der hierzu gehörenden Radialrichtung R, wird durch die Gestaltung des Drahtgestricks, welches das gesamte Abschirmelement vom Verankerungspunkt abschirmt, ermöglicht. Dadurch, dass das Drahtgestrick die Durchgriffsöffnung im Bauteil komplett umschließt, d.h., dass kein direkter Kontakt zwischen der Hülse und dem plattenartigen Bauteil möglich ist, wird bedingt durch die einzelnen Drahtverschlaufungen und durch das Zusammenspiel zwischen Drahteigenschaften und Luftpolstern zwischen den einzelnen Drahtschlaufen eine Entkopplung/Dämpfung ermöglicht.

Um eine Oberflächenbeschädigung während des Betriebs zu vermeiden, befindet sich zwischen dem Drahtgestrick und dem plattenartigen Bauteil auf jeder Seite eine Gleitscheibe, die verhindert, dass das Drahtgestrick die Oberfläche des Bauteiles, welches z. B. aus Aluminium gefertigt ist, beschädigt.

Erfindungsgemäße Lösung vereinigt weitere Vorteile in sich: Erfindungsgemäße Lösung ist insbesondere hinsichtlich ihrer mechanischen Stabilität und ihrer Entkopplungs-/Dämpfungseigenschaften thermisch unempfindlich, was insbesondere bei hochtemperaturbelasteten Abschirmteilen sehr relevant ist.

Die erfindungsgemäße Lösung zeichnet sich durch kompakte Bauweise und eine sehr hohe mechanische Lebensdauer aus.

Eine maximalmögliche Verschiebbarkeit der Befestigungseinrichtung innerhalb der Durchgriffsöffnung kann in einfacher Art und Weise durch angepasste Dimensionierung der Durchgriffsöffnung im plattenartigen Bauteil und der Befestigungseinrichtung beeinflusst werden.

Die Dämpfungseigenschaften des Drahtgestricks können in einfacher Art und Weise durch Variation des Drahtgestricks hinsichtlich der verwendeten Drahtdicke, Drahthärte sowie der Art und Weise der Verstrickung des Drahtes angepasst werden. Dem Fachmann sind unterschiedliche Anpassungslösungen an explizite oder konkrete Anforderungen mit wenigen Versuchen zugänglich. Ebenso ist das plattenartige Bauteil, insbesondere dessen Befestigungseinrichtung durch einfache Anpassung der Einzelteile an unterschiedliche Dicken t anpassbar.

In einer bevorzugten Ausführungsform liegt der zumindest eine Dämpfungskörper im bestimmungsgemäßen Gebrauch des plattenartigen Bauteils in einer Axialrichtung A derart vorgespannt an die Befestigungsöffnung umgebenden Auflagebereiche an, dass die Befestigungseinrichtung unter der Krafteinwirkung Fₚ senkrecht zur Axialrichtung (A), welche der Radialrichtung R entspricht verschiebbar ist, wobei die für die Verschiebung erforderliche Krafteinwirkung Fₚ zumindest größer als die Gewichtskraft der Befestigungseinrichtung ist.

Hierdurch ist wirksam ein Klappern oder unbeabsichtigtes loses Bewegen der Befestigungseinrichtung in der Durchführungsöffnung verhindert. Die für die Verschiebung notwendige Krafteinwirkung Fₚ trägt überdies zur Dämpfung von Schwingungen nach Art eines Reibungsdämpfers bei.

In einer weiteren bevorzugten Ausführungsform der Erfindung ist die Hülse und/oder der zumindest eine Dämpfungskörper kragenhülsenartig ausgebildet. Eine solche Ausgestaltung bietet eine geeignete Auflagefläche für ein Befestigungselement (Befestigungsschraube) oder eine Auflagefläche der Hülsen auf dem Befestigungspartnerteil.

Eine weitere vorteilhafte Maßnahme ist, den Dämpfungskörper aus einer z. B. zylindrischen Dämpfungskörperhülse und zwei Dämpfungskörperringen auszubilden. Derartig geformte Einzelteile sind einfach in der Herstellung.

Der Dämpfungskörper kann zweckmäßigerweise aus einem kragenhülsenartigen Dämpfungskörper und einem Dämpfungskörperring gebildet sein. Eine solche Ausgestaltung ermöglicht eine geringere Bauteilanzahl zur Ausbildung der Befestigungseinrichtung.

Zweckmäßigerweise kann die starre Hülse aus einem Kragenhülsenteil und einer mit dem Kragenhülsenteil verbundenen Deckelscheibe ausgebildet sein. Eine derartige Ausgestaltung ist ebenfalls einfach in der Herstellung, was die Einzelteile angeht und einfach in der Verbindungstechnik, die z. B. ein Nieten sein kann.

Zwischen dem plattenartigen Bauteil und dem zumindest einen Dämpfungskörper ist zumindest als Zwischenscheibe eine Gleitscheibe angeordnet. Auf der Gleitscheibe können die Drahtgestricke des Dämpfungskörpers, insbesondere deren Drahtschlaufen, gut gleiten. Die Gleitscheiben sind bevorzugt aus Stahl ausgebildet und bilden eine widerstandsfähige Gleitfläche, sodass freie Oberseiten in der Umgebung der Befestigungsöffnungen des plattenartigen Bauteils, welches oftmals aus Aluminium gefertigt ist, nicht beschädigt oder verschlissen werden.

Die Gleitscheibe weist zweckmäßigerweise ein lichtes Maß D_{GS1} < D auf und besitzt ein Außenmaß von D_{GS2} > D_{Dk2}. Hierdurch ist sichergestellt, dass das Drahtgestrick des Dämpfungskörpers in der Umgebung der Befestigungsöffnung nicht mit der Oberseite des plattenartigen Bauteils in Berührung kommt sondern unabhängig von der Verschiebestellung des Befestigungselements relativ zum plattenartigen Bauteil immer mit einer Oberseite der Gleitscheibe in Kontakt tritt.

Der Dämpfungskörper kann zweckmäßigerweise auch aus einem Drahtgewirr oder einem Drahtgeflecht gebildet sein. Im Sinne der Erfindung ist der Begriff "Drahtgestrick" als Oberbegriff für Gebilde aus einem Drahtgewirr, einem Drahtgestrick oder einem Drahtgeflecht zu interpretieren. Somit umfasst der Begriff "Drahtgestrick" tatsächlich auch aus Draht gestrickte Gebilde, wie auch aus Draht geflochtene Gebilde wie auch aus einem Drahtgewirr ausgebildete Gebilde.

Um beispielsweise in der Axialrichtung A und in der Radialrichtung R unterschiedliche Dämpfungseigenschaften oder Entkopplungseigenschaften zu realisieren, kann der Dämpfungskörper aus mehreren Dämpfungskörpern zusammengesetzt sein, welche unterschiedliche Kompressibilität aufweisen. So ist es beispielsweise möglich, in Radialrichtung R eine andere Dämpfungsrate und/oder andere Entkopplungseigenschaften zu realisieren als in Axialrichtung A.

Im Folgenden wir die Erfindung anhand der Zeichnung beispielhaft näher erläutert. Es zeigen:
- Figur 1:: eine erste Ausführungsform des erfindungsgemäßen plattenartigen Bauteils in einer schematischen Explosionsdarstellung;
- Figur 2:: die Ausführungsform gemäß Figur 1 in schematischer Zusammenbaudarstellung;
- Figur 3:: eine zweite Ausführungsform des erfindungsgemäßen plattenartigen Bauteils in Explosionsdarstellung;
- Figur 4:: die Ausführungsform gemäß Figur 3 schematisch in Zusammenbaudarstellung;
- Figur 5:: eine Schnittdarstellung einer weiteren Ausführungsform des erfindungsgemäßen plattenartigen Bauteils.

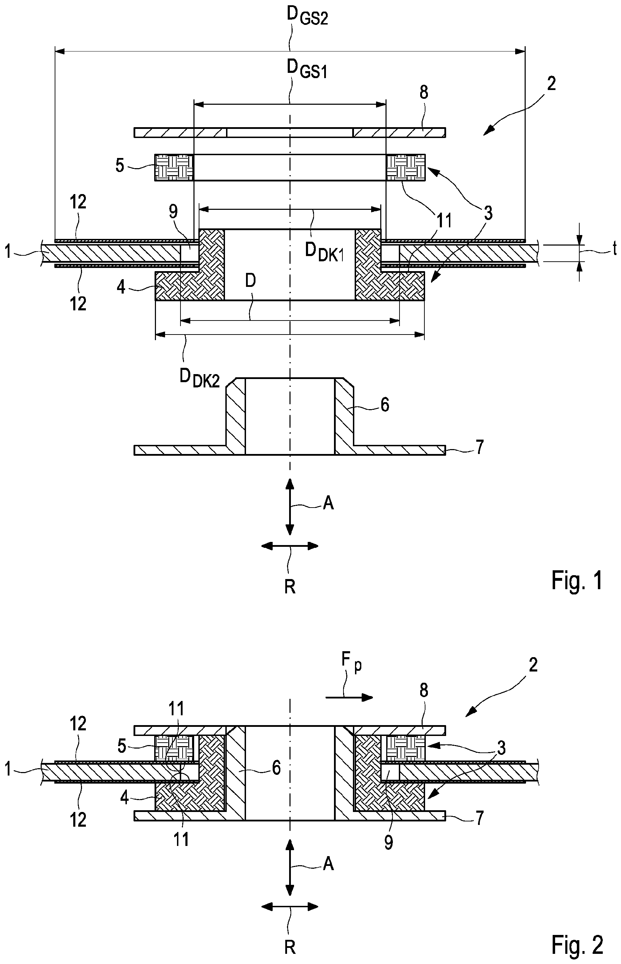

In einer ersten Ausführungsform (Figuren 1 und 2) des erfindungsgemäßen plattenartigen Bauteils 1 aufweisend eine Befestigungseinrichtung 2 ist ein Dämpfungskörper 3 mehrteilig aus einem Kragenhülsenteil 4 und einem Dämpfungskörperring 5 ausgebildet. Eine Hülse 6 ist als Kragenhülse mit einem umlaufenden Kragen 7, welcher an ein zentrales Hülsenteil angeformt ist, ausgebildet. Der Hülse 6 ist eine Deckelscheibe 8 zugeordnet. Das plattenartige Bauteil besitzt eine Befestigungsöffnung 9. Die Befestigungsöffnung 9 kann beispielsweise ein Rundloch, ein Langloch oder ein Loch mit einer anderen geometrischen Ausgestaltung oder Kontur haben. Das plattenartige Bauteil 1 besitzt eine Dicke t wobei im Falle eines mehrlagigen Bauteil 1 die Dicke t als Gesamtdicke im direkten Umgebungsbereich als Befestigungsöffnung 9 zu verstehen ist. In den Figuren 1 bis 5 sind lediglich Schnittdarstellungen dargestellt, die keine Einschränkung dahingehend erlauben, dass es sich um eine runde Durchtrittsöffnung 9 handelt. Auch können andere, im Schnitt dargestellte Teile Rundkörper oder Körper mit anderem als rundem Querschnitt sein.

Die Befestigungsöffnung 9 weist in den jeweiligen Schnittdarstellungen ein lichtes Maß D auf. Der Dämpfungs-/Entkopplungskörper 3, also das Kragenhülsenteil 4, besitzt in dem Bereich, in dem es die Befestigungsöffnung 9 durchgreift ein Außenmaß D_{Dk1}, welches um ein Untermaß U = D - D_{Dk1} kleiner ist als das lichte Maß D. Hierdurch kann der Dämpfungskörper 3 um das Maß U in einer Radialrichtung R senkrecht zu einer Axialrichtung A innerhalb der Befestigungsöffnung 9 verschoben werden. In Bereichen, in denen das Kragenhülsenteil 4 oder der Dämpfungskörperring 5 in Axialrichtung A mit dem plattenartigen Bauteil 1 in Verbindung tritt, weisen die Dämpfungskörperringe 5 oder das Kragenhülsenteil 4 ein Maß D_{Dk2} auf, welches derart groß bemessen ist, dass bei maximaler Verschiebung um das Maß U immer noch ausreichende Überlappung sichergestellt ist. Das Maß D_{Dk2} entspricht somit dem Maß D + 2 * U im jeweiligen Schnitt.

Diese Bildungsregeln der Erfindung müssen nicht über den gesamten Umfang um die Befestigungsöffnung 9 herum gelten. So kann beispielsweise der Dämpfungskörper 3 außen eine gezackte oder gewellte Umfangskontur besitzen, sodass der Dämpfungskörper 3 nur Abschnittsweise aufliegt und zwischen den Auflagebereichen 11 in Umfangsrichtung gesehen immer wieder Lücken vorgesehen sind. In einem solchen Fall gelten obige Regeln in Umfangsrichtung nur abschnittsweise.

Es hat sich als besonders zweckmäßig herausgestellt, zwischen den Auflagebereichen 11, in der Umgebung der Befestigungsöffnung 9 zwischen dem plattenartigen Bauteil 1 und dem Dämpfungskörper 3 beziehungsweise dessen Einzelteilen Gleitscheiben 12 vorzusehen, auf dem der Dämpfungskörper 3 gleiten kann ohne das plattenartige Bauteil 1 direkt zu berühren. Die Gleitscheiben 12 sind bevorzugt aus Stahl ausgebildet und weisen z. B. eine geschliffene Oberfläche auf.

Dem gegenüber ist in einer besonderen Ausführungsform das plattenartige Bauteil aus Aluminium gefertigt und kann ein oder mehrlagig sein und insbesondere als Abschirmteil zur Wärmeabschirmung in Kraftfahrzeugen dienen. Der Dämpfungskörper 3 ist aus einem Drahtgestrick, Drahtgewirr oder Drahtgeflecht ausgebildet, wobei als Drahtmaterial insbesondere Edelstahl oder Stahl in Frage kommt. Die Hülse 6 beziehungsweise deren angeformter Kragen 7 und die Deckscheibe 8 sind aus massivem Stahlwerkstoff ausgebildet. In besonderen Ausführungsformen, insbesondere bei niedrigen Temperaturbereichen kann auch eine Ausführungsform aus Kunststoff oder Aluminium in Frage kommen. Für den Fall, dass das plattenartige Bauteil 1 aus Aluminium gefertigt ist und der Dämpfungskörper aus einem Nichtedelstahl-Stahldraht gefertigt ist, kann es sinnvoll sein, mögliche Berührstellen zwischen dem Dämpfungskörper 3 und dem plattenartigen Bauteil 1 mit einem Isolator zu versehen, um die Bildung eines galvanischen Elementes zu verhindern. Es besteht sonst gegebenenfalls die Möglichkeit einer unbeabsichtigten Korrosion.

Figur 2 zeigt die Ausführungsform gemäß 1 in zusammengebauten Zustand.

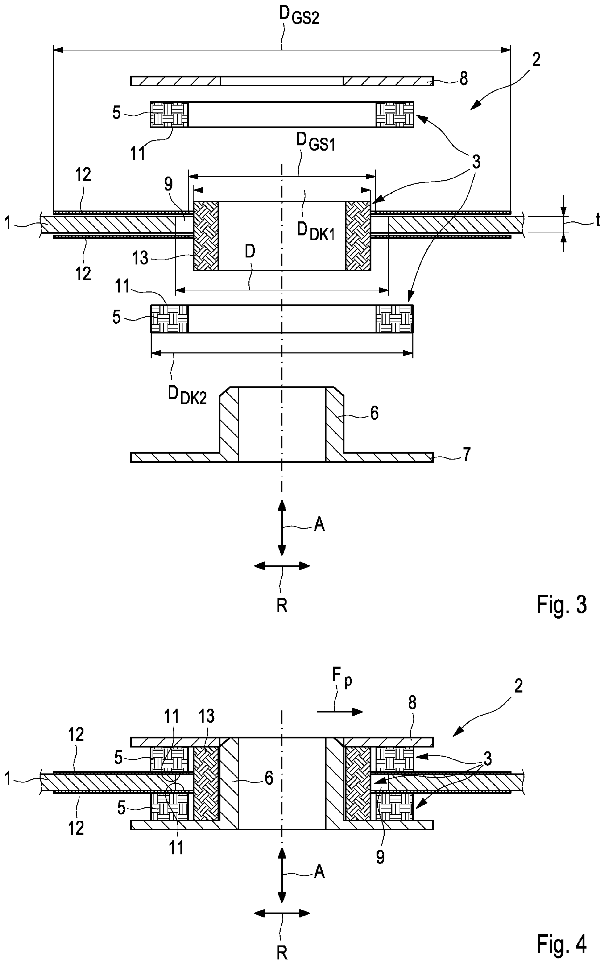

Eine weitere Ausführungsform gemäß der Figuren 3 und 4 unterscheidet sich von der Ausführungsform der Erfindung gemäß der Figuren 1 und 2 lediglich dadurch, dass der Dämpfungskörper 3 aus zwei Dämpfungskörperringen 5 und einem z. B. zylindrischen Dämpfungskörperteil 13 ausgebildet ist.

Figur 3 zeigt diese Ausführungsform in Explosionsdarstellung. Figur 4 zeigt die Ausführungsform gemäß Figur 3 in einer montierten Stellung.

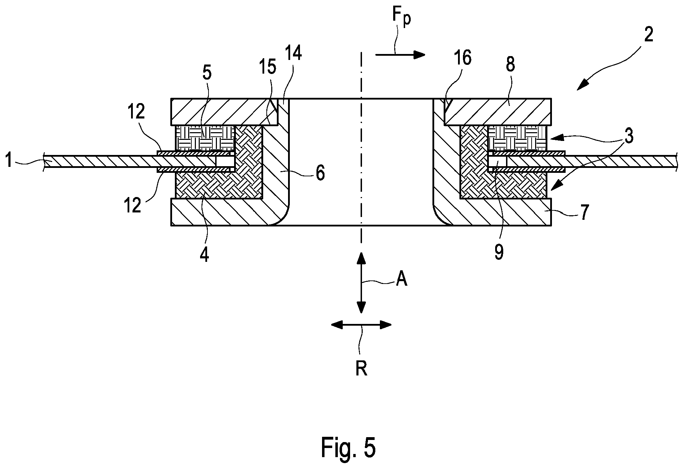

In Figur 5 ist die Ausführungsform gemäß der Figur 1 und 2 etwas detaillierter dargestellt, dahingehend, dass die Hülse 6 an einem in Axialrichtung A der Deckelscheibe 8 zugewandten Ende einen Ringkragen 14 aufweist, der gegenüber der Hülse 6 eine verminderte Wandstärke besitzt. Der Ringkragen 14 ist radial innen angeordnet, so dass die Deckelscheibe 8 auf einer Ringschulter 15 aufliegen kann. Der Ringkragen 14 kann zur Verbindung mit der Deckelscheibe 8 radial nach außen aufgeweitet werden und kommt somit zur Anlage mit einer Abschrägung 16 der Deckelscheibe 8, so dass eine formschlüssige Verbindung ausgebildet ist. Eine derartige Verbindung zwischen der Deckelscheibe 8 und der Hülse 6 ist lediglich beispielhaft zu sehen. Ebenso können Verschweißungen, Verklebungen, Verpressungen, Verstemmungen oder dergleichen andere Verbindungstechniken zwischen einer Deckelscheibe und einer Hülse zur Anwendung kommen.

### Bezugszeichenliste

- t: Dicke
- D: lichtes Maß
- L: Länge
- U: Untermaß
- A: Axialrichtung
- Fₚ: Krafteinwirkung
- R: Radialrichtung

- 1: plattenartiges Bauteil/Bauteil
- 2: Befestigungseinrichtung
- 3: Dämpfungs-/Entkopplungskörper
- 4: Kragenhülsenteil
- 5: Dämpfungskörperringe
- 6: Hülse
- 7: Kragen
- 8: Deckelscheibe
- 9: Befestigungsöffnung

- 11: Auflagebereiche
- 12: Gleitscheibe
- 13: zylindrisches Dämpfungskörperteil
- 14: Ringkragen
- 15: Ringschulter
- 16: Abschrägung

## Patentansprüche

1. Plattenartiges Bauteil einer Dicke (t) mit einer das plattenartige Bauteil (1) durch eine Befestigungsöffnung (9) mit einem lichten Maß (D) durchgreifenden Befestigungseinrichtung (2), wobei die Befestigungseinrichtung (2) aufweist:
- eine starre, die Befestigungsöffnung (9) durchgreifende Hülse (6) einer Länge L > t, durch die ein Befestigungselement führbar ist,
- die Hülse (6) außenumfänglich von zumindest einem Dämpfungs-/Entkopplungskörper (3) aus einem Drahtgestrick umgeben ist, wobei
im bestimmungsgemäßen Gebrauch des plattenartigen Bauteils der Dämpfungskörper (3) im Bereich eines Durchtritts durch die Befestigungsöffnung (9) ein Außenmaß von D_{Dk1} < D besitzt, so dass ein Untermaß U = D - D_{Dk1} entsteht und
der zumindest eine Dämpfungskörper (3) im Bereich außerhalb des Durchtritts durch die Befestigungsöffnung (9) in einer Umfangsrichtung zumindest abschnittsweise ein Außenmaß von D_{Dk2} > D + 2 * U besitzt und wobei zwischen dem plattenartigen Bauteil (1) und dem zumindest einen Dämpfungskörper (3) zumindest eine Gleitscheibe (12) angeordnet ist.

2. Bauteil nach Anspruch 1,
**dadurch gekennzeichnet, dass**
im bestimmungsgemäßen Gebrauch der zumindest eine Dämpfungskörper (3) in einer Axialrichtung (A) derart vorgespannt an die Befestigungsöffnung (9) umgebende Auflagebereichen (11) anliegt, dass die Befestigungseinrichtung (2) unter einer Krafteinwirkung (Fₚ) senkrecht zur Axialrichtung (A) (= Radialrichtung (R)) verschiebbar ist, wobei die Krafteinwirkung (Fₚ) zumindest größer als die Gewichtskraft der Befestigungseinrichtung (2) ist.

3. Bauteil nach Anspruch 1 oder 2,
**dadurch gekennzeichnet, dass**
die Hülse (6) und/oder der zumindest eine Dämpfungskörper (3) kragenhülsenartig ausgebildet ist.

4. Bauteil nach einem der vorangegangenen Ansprüche,
**dadurch gekennzeichnet, dass**
der Dämpfungskörper (3) aus einer zylindrischen Dämpfungskörperhülse (6) und zwei Dämpfungskörperringen (5) gebildet ist.

5. Bauteil nach einem der vorangegangenen Ansprüche,
**dadurch gekennzeichnet, dass**
der Dämpfungskörper (3) aus einem kragenhülsenartigen Dämpfungskörper und einem Dämpfungskörperring (5) gebildet ist.

6. Bauteil nach einem der vorangegangenen Ansprüche,
**dadurch gekennzeichnet, dass**
die starre Hülse (6) aus einem Kragenhülsenteil (4) und einer mit dem Kragenhülsenteil (4) verbundenen Deckelscheibe (8) gebildet ist.

7. Bauteil nach einem der vorangegangenen Ansprüche,
**dadurch gekennzeichnet, dass**
die Gleitscheibe (12) ein lichtes Maß (D_{GS1} < D) besitzt und/oder ein Außenmaß (D_{GS2} > D_{DK2}) besitzt.

8. Bauteil nach einem der vorangegangenen Ansprüche, **dadurch gekennzeichnet, dass**
der Dämpfungskörper (3) aus einem Drahtgewirr, einem Drahtgestrick und/oder einem Drahtgeflecht gebildet ist.

9. Bauteil nach einem der vorangegangenen Ansprüche, **dadurch gekennzeichnet, dass**
der zumindest eine Dämpfungskörper (3) aus mehreren Dämpfungskörpern (3) gebildet ist, welche unterschiedliche Kompressibilität aufweisen.

10. Bauteil nach einem der vorangegangenen Ansprüche, **dadurch gekennzeichnet, dass**
die Dämpfungskörper (3) in Axialrichtung (A) eine andere Kompressibilität aufweisen als in der Radialrichtung (R).

## Claims

1. A plate-like component of a thickness (t) with a fastening device (2) that reaches through the plate-like component (1) through a fastening opening (9) with an inner dimension (D), wherein the fastening device (2) has:
- a rigid sleeve (6) of a length L > t, which reaches through the fastening opening (9) and through which a fastening element can be inserted,
- the sleeve (6) is surrounded on its outer circumference by a damping/decoupling element (3) composed of a wire knit, wherein
when the plate-like component is being used as intended, the damping element (3), in the region of a passage through the fastening opening (9), has an outer dimension of D_{DE1} < D so that an undersizing U = D - D_{DE1} is produced and the at least one damping element (3), in the region situated outside of the passage through the fastening opening (9) in a circumference direction, has an outer dimension in at least some sections of D_{DE2} > D + 2 ^{∗} U and wherein at least one sliding washer (12) is positioned between the plate-like component (1) and the at least one damping element (3).

2. The component according to claim 1,
**characterized in that**
when being used as intended, the at least one damping element (3) is prestressed in an axial direction (A) against supporting regions (11) surrounding the fastening opening (9) in such a way that with an introduction of force (F_{P}), the fastening device (2) is movable perpendicular to the axial direction (A) (= radial direction (R)), wherein the introduction of force (F_{P}) is at least greater than the force due to gravity of the fastening device (2).

3. The component according to claim 1 or 2,
**characterized in that**
the sleeve (6) and/or the at least one damping element (3) is/are embodied in a collared sleeve-like fashion.

4. The component according to one of the preceding claims,
**characterized in that**
the damping element (3) is composed of a cylindrical damping element sleeve (6) and two damping element rings (5).

5. The component according to one of the preceding claims,
**characterized in that**
the damping element (3) is composed of a damping element embodied in a collared sleeve-like fashion and a damping element ring (5).

6. The component according to one of the preceding claims,
**characterized in that**
the rigid sleeve (6) is composed of a collared sleeve part (4) and a cover plate (8) that is connected to the collared sleeve part (4).

7. The component according to one of the preceding claims,
**characterized in that**
the sliding washer (12) has an inner dimension (D_{SW1} < D) and/or an outer dimension (D_{SW2} > D_{DE2}).

8. The component according to one of the preceding claims,
**characterized in that**
the damping element (3) is composed of a tangled wire, a wire knit, and/or a wire mesh.

9. The component according to one of the preceding claims,
**characterized in that**
the at least one damping element (3) is composed of several damping elements (3) that have different compressibilities.

10. The component according to one of the preceding claims,
**characterized in that**
the damping elements (3) have a different compressibility in the axial direction (A) than in the radial direction (R).

## Revendications

1. Composant en forme de plaque d'une épaisseur (t), comprenant un dispositif de fixation (2) traversant le composant en forme de plaque (1) par une ouverture de fixation (9) d'une dimension intérieure (D), le dispositif de fixation (2) comprenant :
- un manchon (6) rigide, traversant l'ouverture de fixation (9), d'une longueur L > t, permettant de mener un élément de fixation à travers celui-ci,
- le manchon (6) étant entouré sur son pourtour extérieur par au moins un corps d'amortissement/découplage (3) en tricot de fils,
dans lequel, lors d'un usage conforme du composant en forme de plaque, le corps d'amortissement (3) possède, dans la zone d'un passage à travers l'ouverture de fixation (9), une dimension extérieure de D_{Dk1} < D, de sorte qu'il en résulte une sous-dimension U = D - D_{Dk1}, et ledit au moins un corps d'amortissement (3) possède, dans la zone située à l'extérieur du passage à travers l'ouverture de fixation (9), dans une direction circonférentielle, au moins localement une dimension extérieure D_{Dk2} > D + 2 * U, et au moins un disque de glissement (12) est disposé entre le composant en forme de plaque (1) et ledit au moins un corps d'amortissement (3).

2. Composant selon la revendication 1,
**caractérisé en ce que** lors d'un usage conforme, ledit au moins un corps d'amortissement (3) s'appuie sous précontrainte dans une direction axiale (A) contre des zones d'appui (11) entourant l'ouverture de fixation (9) de telle sorte que le dispositif de fixation (2) peut être déplacé sous l'effet d'une force (Fₚ) perpendiculairement à la direction axiale (A) (= direction radiale (R)), l'effet de la force (Fₚ) étant au moins supérieur au poids du dispositif de fixation (2).

3. Composant selon la revendication 1 ou 2,
**caractérisé en ce que** le manchon (6) et/ou ledit au moins un corps d'amortissement (3) est réalisé sous la forme d'un manchon à collerette.

4. Composant selon l'une des revendications précédentes,
**caractérisé en ce que** le corps d'amortissement (3) est formé d'un manchon de corps d'amortissement (6) cylindrique et de deux anneaux de corps d'amortissement (5).

5. Composant selon l'une des revendications précédentes,
**caractérisé en ce que** le corps d'amortissement (3) est formé d'un corps d'amortissement en forme de manchon à collerette et d'un anneau de corps d'amortissement (5).

6. Composant selon l'une des revendications précédentes,
**caractérisé en ce que** le manchon rigide (6) est formé d'une partie de manchon à collerette (4) et d'un disque de couvercle (8) relié à la partie de manchon à collerette (4).

7. Composant selon l'une des revendications précédentes,
**caractérisé en ce que** le disque de glissement (12) possède une dimension intérieure (D_{GS1} < D) et/ou possède une dimension extérieure (D_{GS2} > D_{Dk2}).

8. Composant selon l'une des revendications précédentes,
**caractérisé en ce que** le corps d'amortissement (3) est formé d'un emmêlement de fils, d'un tricot de fils et/ou d'un treillis de fils.

9. Composant selon l'une des revendications précédentes,
**caractérisé en ce que** ledit au moins un corps d'amortissement (3) est formé de plusieurs corps d'amortissement (3) qui présentent une compressibilité différente.

10. Composant selon l'une des revendications précédentes,
**caractérisé en ce que** les corps d'amortissement (3) présentent une compressibilité dans la direction axiale (A) différente de celle dans la direction radiale (R).
